# EUROPEAN PATENT SPECIFICATION

(11) **EP 4 501 564 B1**
(45) Date of publication and mention of the grant of the patent: **13.05.2026**
(21) Application number: 24188223.2
(22) Date of filing: 12.07.2024
(51) Int. Cl.: B27N 1/00, B27N 3/00, B27N 3/02, B27N 3/04, B27N 3/08, B27N 3/14, B27N 3/18, B27N 3/20

(54) **HEMP-BASED WOOD**
HANFBASIERTES HOLZ
BOIS A BASE DE CHANVRE

(30) Priority: 14.07.2023 BE 202305594
(43) Date of publication of application: 05.02.2025
(73) Proprietor: C-Biotech bv, 9140 Temse (BE)
(72) Inventor: NOPENS, Ingmar, 9140 Temse (BE); VERSTRAETE, Frederik, 9140 Temse (BE); CORDEEL, Filip, 9140 Temse (BE)
(74) Representative: Brantsandpatents bv

(56) References cited:
- WO-A1-2020/198393
- CN-A- 108 656 300
- US-A1- 2002 100 565

## Description

### TECHNICAL FIELD

The invention relates to hemp products. More specifically, the manufactured hemp products described herein may include hemp (composite) panels, blocks, beams, boards, flooring, furniture, building materials and other wood products.

### STATE OF THE ART

Today's increasing demand for wood products, combined with rampant deforestation, has resulted in a scarce supply of timber resources. Many species of majestic rainforest trees are threatened or on the verge of extinction. In addition to a reduced supply of trees, many trees traditionally sought after for their timber take many years to reach maturity. Even if these trees are replanted, it will take many years to replenish the supply. This scarcity of natural wood may be particularly noticeable in industries that depend on the specific aesthetic and structural properties of natural wood, such as wood flooring, furniture, building materials or other wood industries.

Alternatives to natural wood may include plywood, chipboard and the like. However, many of these alternatives are derived from natural wood, but lack the visual or technical properties of natural wood. Moreover, they may not solve the problem of finding and maintaining a sustainable supply of raw material for the future.

Hemp-based materials, unlike traditional wood sources, offer the advantage of a very fast life cycle of the annual hemp plant, which allows for multiple harvests per year, generating multiple yields per unit area. Moreover, hemp also absorbs many unwanted substances in soil, so planting hemp also serves as soil remediation. Finally, hemp also has excellent mechanical characteristics in terms of strength, ductility, workability, as well as insulation value.

CN108656300A discloses a hemp stem core green ecological board and a manufacturing method thereof.

### SUMMARY OF THE INVENTION

In a first aspect, the invention relates to a hemp-based wooden panel as defined in claim 1, wherein the panel extends along mutually orthogonal x- and y-axes, and has a thickness along a z-axis orthogonal to the x- and y-axes, the panel comprising processed hemp stalks, and a binder for joining the hemp stalks into a solid form. Thereby, the processed hemp stalks are substantially quasi-isotropically oriented along the length thereof, and the processed hemp stalks make up a weight percentage of at least 70% of the panel, with the binder making up a weight percentage of at least 5% of the panel and at most 20% of the panel.

In a second aspect which is not part of the claimed invention, the disclosure relates to a process for manufacturing a hemp-based wooden panel, comprising the following steps:
a. reducing hemp stalks in length;
b. mixing the reduced hemp stalks with a binder into a homogeneous mixture in a mould, providing the binder with a weight ratio to the reduced hemp stalks between 0.05 and 0.30, preferably between 0.1 and 0.25;
c. compressing the homogeneous mixture in the mould at a pressure of preferably at least 10 bar, further preferably at least 20 bar;
d. heating the compressed mixture to a minimum core temperature in the mixture of at least 120°C, preferably at least 150°C, and maintaining the minimum core temperature for a predetermined time of at least 1 minute, preferably at least 5 minutes;
e. recompressing the heated mixture at a pressure, preferably of at least 10 bar, further preferably at least 20 bar;
f. cooling the recompressed mixture to a temperature below 50°C, preferably below 35°C.

In a further aspect, the invention relates to it being a hemp-based wooden building material with the same characteristics as the wooden panel. The dimensions, and in particular the thickness, can be varied according to the application.

### DETAILED DESCRIPTION

Unless otherwise defined, all terms used in the description of the invention, including technical and scientific terms, have the meaning as generally understood by those skilled in the technical field of the invention.

In a first aspect, the invention relates to a hemp-based wooden panel, wherein the panel extends along mutually orthogonal x- and y-axes, and has a thickness along a z-axis orthogonal to the x- and y-axes, and the panel comprising processed hemp stalks and a binder for joining the hemp stalks to a solid form. Herein, the processed hemp stalks are oriented along the length substantially at least quasi-isotropic (and optionally fully isotropic, although preferably a version that is not fully isotropic, as further described), wherein the processed hemp stalks extend isotropically oriented in the plane defined by the x-axis and y-axis, preferably wherein the processed hemp stalks extend anisotropically oriented in the plane defined by the x-axis and z-axis, and extend anisotropically oriented in the plane defined by the y-axis and z-axis, and the processed hemp stalks make up a weight percentage of at least 70% of the panel, wherein the binder makes up a weight percentage of at least 5% of the panel and at most 20% of the panel. Quasi-anisotropy amounts to an isotropic distribution in the plane of the panel, along the x and y axes. This means that the processed hemp stems extend substantially without a preferred orientation in the plane (based on the vectors of tangents projected on the xy-plane along the processed hemp stems). For panels in particular, the thickness is substantially lower than the other dimensions. In many manufacturing processes, the panels are pressed under high pressure, with this pressure directed substantially perpendicular to the xy-plane, affecting the orientation of the processed hemp stalks in the z-direction (especially relative to the orientations in the xy-plane). At the initial blending of the hemp stalks and the binder, the orientation of the hemp stalks is mostly random, and at that stage the hemp stalks still have a complete isotropic distribution (in all directions) in terms of orientation. During pressing, the mutual relationships between the orientation along x-axis and y-axis are typically maintained, but the relationship of the orientation along the z-axis with respect to the x- and y-axis changes.

This results in a panel where the hemp stalks end up being isotropically distributed only in the xy plane, but not in the yz or xz plane. In the yz and xz planes, the hemp stalks will extend in orientation more along the y and x axes than along the z axis. The ratio of the x- or y-component to the z-component of the orientation may vary, but will preferably be at least 2:1, in further preference at least 3:1, 4:1 or even 5:1. In further preference, it will be at least 7.5:1 or even at least 10:1, 20:1, 40:1, 60:1, 100: 1.

Without being bound by theory, an orientation of the hemp stalks in the finished product (panel) is assumed, where the size of the z-component of the orientations of the hemp stalks is on average lower than the size of the x- and y-components of these orientations. Typically, the sizes of the x and y components will be approximately similar, unless specific pressing steps followed with a vector in the xy plane. In other words, the hemp stems in the finished panel tend more towards an orientation in one plane, but are otherwise randomly distributed in terms of orientation in this plane.

The term "processed hemp stalks" should be understood as the reduced, individual pieces of hemp stalks, which have been reduced to a desired length. A piece of hemp stalk may involve a shive, or may involve a fibre, but may also involve one or more shives and/or one or more fibres still attached to each other after reduction in length. Preferably, broken pieces of shives are considered as separate shives, even if they are still attached to each other, given that they allow for a different orientation between them.

Towards the mass ratio of binder versus hemp stalks, it is important to note that typically there is a push to reduce the amount of binder, partly for ecological reasons and recyclability. Binders can also emit VOCs, reducing air quality where these panels are used. However, a minimum amount of binder is always needed to keep the fibres and shives together, and ensure a cohesive structure.

The final feature of the panel lies in the quasi-isotropy of the processed hemp stalks therein. Unlike known panels, it opts for a quasi random distribution in terms of orientation, at least in the plane in which the panel extends, and preferably only in the plane in which the panel extends. For known panels, the fibres and warps are provided parallel to each other and fixed with a binder, partly to achieve a more aesthetic appearance. However, by varying the orientation, the applicant manages to obtain more interlocking between the individual fibres and/or shives, connecting them to a larger number of other particles. This results in a much firmer anchorage, which can also reduce the amount of binder. In addition, this also provides panels that show similar strength in different directions, whereas in known panels these typically have a "strong direction", where forces perpendicular to them can be tolerated very well, but where forces in other directions can then in turn have a much greater effect, damaging or weakening the panel for later. Spreading the orientation avoids systematically further weakening the panel by loads in these other directions. Without being bound by theory, it is possible that in pressing, the random orientation of the fibres and sheaves is partially reduced in the pressing direction(s). However, the random orientation will be substantially retained in the plane perpendicular to the (first) pressing direction(s), and still partially present in the planes perpendicular to it. Given that most panel designs are substantially flat with the longest dimensions in the plane perpendicular to the (first) pressing direction, and a limited thickness, this is therefore the most advantageous in terms of strength.

Processed hemp stalks include hemp shives and hemp fibres.

The length of at least 75% of the hemp shives is between 1.0 cm and 5.0 cm, preferably between 1.0 cm and 4.0 cm.

The uniform length of the shives should be understood as boundaries within which the majority of the shives will fall in terms of length, according to the invention, at least 75% or more, such as, for example, 80%, 85%, 90%, etc.

Preferably, it is about the percentage in mass of shives. However, in certain embodiments, it may be about the percentage in number of shives. In the first case, this allows for a larger absolute amount of short shives, with overall limited mass, and a smaller absolute amount of longer shives, again with overall limited mass. In the second case, it concerns a rather normal distribution around a mean value or centre range.

It should be understood that in most cases the shives or parts thereof cannot or will not be processed individually, and it is a bulk process (e.g. shredding), where a certain length is aimed at, but a small quantity of deviating products (too long or too short) will almost inevitably be present. It should therefore be understood that it is desirable to minimise this quantity as far as possible, but that the intended effects already apply to certain minority fractions of such deviating products in the processed shives.

The choice of uniform length for the shives between 1.0 cm and 5.0 cm, and in particular between 1.0 cm and 4.0 cm or even between 1.5 cm and 2.5 cm, was made specifically to give the resulting panel the desired properties in terms of strength, uniformity, machinability and ease of production among others.

In a preferred embodiment, at least 50%, preferably at least 75%, further preferably at least 85%, of the hemp fibre has a length of not more than 20.0 cm, preferably not more than 15.0 cm and further preferably not more than 10.0 cm.

In a preferred embodiment, not more than 98%, preferably not more than 96%, further preferably not more than 94% of the hemp fibres have a length of not more than 20.0 cm, preferably not more than 15.0 cm and further preferably not more than 10.0 cm.

The length of at least 50% of the hemp fibres is between 5.0 cm and 50.0 cm and preferably between 10.0 cm and 45.0 cm.

The uniform length of the fibres should be understood as boundaries within which most of the fibres will fall in terms of length, according to the invention, at least 50% and preferably at least 66%, or even at least 75% or more, such as, for example, 80%, 85%, 90%, etc.

Preferably, it is about the percentage in mass of fibres. However, in certain embodiments, it may be about the percentage in number of fibres. In the first case, this allows a larger absolute amount of short fibres, with overall limited mass, and a smaller absolute amount of longer fibres, again with overall limited mass. In the second case, it concerns a rather normal distribution around a mean value or centre range.

It should be understood that in most cases the fibres or parts thereof cannot or will not be processed individually, and it is a bulk process (e.g. shredding), where a certain length is aimed at, but a small quantity of deviating products (too long or too short) will almost inevitably be present. It should therefore be understood that it is desirable to minimise this quantity as far as possible, but that the intended effects already apply to certain minority fractions of such deviating products in the processed fibre.

The choice of uniform length for the fibres between 1.0 cm and 60.0 cm, by further preference between 2.5 cm and 55.0 cm, by further preference between 5.0 cm and 50.0 cm and by highest preference between 10.0 cm and 45.0 cm, was made specifically to give the resulting panel the desired properties in terms of strength, uniformity, machinability and ease of production among others.

By limiting the length within a certain range (both with a maximum and a minimum), especially for the fibres, an improved strength of the panel is obtained. Indeed, the panel derives its strength from the interlocking and binding of fibres (and shives) during the production process. By choosing the length of the fibres and shives in this way, the bonding between them can be improved, resulting in a stronger and more durable end product. Thus, on the one hand, it is interesting not to make the fibres and shives too long, so that they can bind and interlock with very many different other fibres and shives. On the other hand, a lower limit is also needed for the length to ensure they have enough length to interlock and bind during production. Making the fibres (and shives) bond better in this way gives the resulting panel higher structural integrity. Controlling the length of fibres and shives also ensures more even distribution through the panel.

Uniformity in length ensures consistent panel density and thickness, which is important for maintaining structural integrity and dimensional stability.

An additional reason for not using fibres that are too long is that a higher density of the panel can be obtained this way. Shorter fibres and shives can be provided closer together, ensuring a higher density, and thus a stiffer and stronger material. Additionally, shorter fibres and shives are easier to handle and process during panel production. They can be mixed more efficiently with adhesives and other additives, resulting in a more homogeneous mixture. The shorter fibres and shives also facilitate the formation of a smooth and even surface during pressing and drying of the panel.

In addition, shorter fibres and shives also allow easier bending, cutting and milling, making them suitable in different applications and machinable with different techniques. Moreover, shorter fibres and shives also have less tendency to splinter during machining, which lowers the risk of surface damage, and allows the panel to be machined without loosening fibres.

Longer fibres and cracks in the panel can create weak spots and increase moisture absorption. This can lead to swelling, warping and reduced dimensional stability of the final product. By reducing the length, the potential for moisture absorption and subsequent swelling is minimised, resulting in a more stable and durable panel. Finally, it allows for a better finish. Shorter fibres and warps help achieve a smoother and more even surface of the panel. They provide better adhesion of surface coatings, such as paint or laminate, and help reduce surface defects such as visible patterns.

In a preferred embodiment, the processed hemp stalks make up at least 75% of the weight percentage of the panel, preferably at least 80% or even 85%, such as, for example, at least 86%, 87%, 88%, 89%, most preferably at least 90%, such as, for example, at least 91%, 92%, 93%, 94%, 95%, 96%, 97%, 98%. A higher grade of hemp stalks produces a more ecological product that is also easier to recycle.

In a preferred embodiment, the binder makes up a maximum weight percentage of the panel of 15%, such as, for example, 14%, 13%, 12%, 11%. Preferably, the maximum weight percentage is only 10%, such as for example 9%, 8%, 7%, 6%, or even lower, such as maximum 5%.

In a preferred embodiment, the processed hemp stalks are a mixture of hemp shives and hemp fibre in a weight ratio of between 1:5 and 3:2, preferably between 1:4 and 1:1, further preferably between 1:3 and 9: 11, and even further preferably between 3:7 and 2:3.

In an alternative preferred embodiment, the processed hemp stalks are provided in a mixture of hemp shives and hemp fibres, in a weight ratio between shives and fibres between 1:6 and 2:3, preferably between 1:4 and 1:2, further preferably between 1:3 and 3:7.

When hemp stalks are processed directly, the ratio of shives to fibres is typically higher than indicated above, with a predominance (by weight) for the shives. This means that without additional steps where a different ratio would be chosen, with direct use, the weight ratio will be higher than 3:2. However, the applicant has found that by lowering the ratio, and thus using more fibres than normal, this makes the produced panel sturdier in terms of internal anchoring of fibres and shives, while too many shives produces a weaker anchoring, given mainly the fibres take care of this. It also allows to obtain higher density panels with very good insulation properties, the latter because the fibres have a porous structure, resulting in air entrapment which in turn provides thermal insulation. This is further in line with the choice of a lower limit on the length of the fibres (and also the shives), as longer fibres (and shives) offer a larger surface area for air entrapment and thus limit heat transfer. The thickness of the fibres and shives can also play a role in this, but is less controllable, as this typically depends more on the type of hemp being worked with.

In an alternative preferred embodiment, the processed hemp stalks are a mixture of hemp shives and hemp fibres, preferably in a weight ratio between 3:2 and 4:1, preferably between 2:1 and 3:1.

In an alternative preferred embodiment, the processed hemp stalks are a mixture of hemp shives and hemp fibre in a weight ratio between 4:1 and 20:1, preferably between 6:1 and 15:1, further preferably between 7:1 and 12:1.

In a preferred embodiment, the (processed) hemp stalks in the panel comprise substantially hemp shives. This relates to at least 80 m%, preferably at least 85 m%, further preferably at least 90 m%, further preferably at least 95 m% or even 97.5 m% or at least 99 m%, relative to the total weight of the processed hemp stalks in the panel, i.e. without binder. To this end, hemp fibres are removed from the product as much as possible.

In a further preferred embodiment, the (processed) hemp stalks in the panel comprise hemp shives to a greater extent. This concerns at least 70 m%, but at most 99 m%, preferably at most 98.5 m%, at further preferred at most 95 m%, at still further preferred at most 90 m%, relative to the total weight of the processed hemp stalks in the panel, i.e. without binder. For this purpose, hemp fibres are removed from the product to a certain extent compared to the natural ratio.

Ideally, the (processed) hemp stalks in the panel should comprise hemp shives with a weight percentage (relative to the total weight of the processed hemp stalks in the panel, i.e. without binder) between 80 m% and 95 m%, preferably between 85 m% and 93.75 m%, further preferably between 87.5 m% and 92.5 m%, such as about 90 m%.

In a further preferred embodiment, when achieving the above weight percentage of hemp shives (relative to total weight of hemp stalks in the panel), due to the improved bonding and strength due to the greater amount of shives, a lower weight percentage of binder (relative to the weight of the entire panel) is possible without adversely affecting the strength of the panel, namely less than 20 m%, preferably less than 17.5 m%, even further preferably less than 15 m% or even 12.5 m% or 10 m%.

In a preferred embodiment, the hemp stalks are unrooted. Hemp stalks are retted by exposing them to water so that the fibres are released from the shives. This can be done in a number of ways (field retting or dew retting, blue retting or mud retting, retting in running water or hot water retting). By not retting the stalks, CO2 emissions are avoided on the one hand. On the other hand, retting breaks down the pectin that holds the hemp stalks (shives and fibres) together and washes away its residues. By not retting the stalks, the pectin remains present (to a greater extent) in the processed hemp stalks, and can on the one hand also assist as a binder in binding the shives and stalks together (even after mechanical separation), but also act as a stabiliser. A stabiliser assists by protecting the final product from chemical degradation.

In a preferred embodiment, the processed hemp stalks are shredded to the uniform length. By shredding, the hemp stalks are mechanically reduced in length, and the shives and fibres are also (partially) separated from each other, eliminating the need for chemical processes to do so. With some fine-tuning, the shredding process allows the stalks to be reduced to an average length, in a certain distribution around this, mainly within a desired range.

In a preferred embodiment, the processed hemp shives have a length distribution of at least 40%, preferably 50% with a length below 1.0 cm.

Preferably, at least 60% or even 70% of hemp shives have a length below 2.0 cm.

In a preferred embodiment, the processed hemp shives have a length distribution of at least 30%, preferably 35% with a length above 1.0 cm.

Preferably, at least 60% or even 70% of hemp shives have a length above 0.5 cm.

In an alternative embodiment, the hemp shives have a length distribution with at least 50% of the hemp shives between 1.0 cm and 4.0 cm, and at least 75% between 1.00 and 5.0 cm.

As mentioned above, it is difficult if not virtually impossible to process the hemp shives to a uniform length that falls absolutely within a very narrow range. Therefore, it is preferable to work with the condition that a majority falls within the desired range, and a larger majority falls within an extension of the desired range. It is natural to try to pursue the uniform length as correctly and completely as possible over all particles. Preferably, therefore, at least 60%, or even 70%, 75%, 80% or more fall within the range of 1.0 cm and 4.0 cm. The same applies to the extended range of 1.0 cm and 5.0 cm, where preferably at least 75% falls herein, and preferably more, such as for example 80%, 85%, 90% or even more.

Further or alternative requirements are also possible, such as at least 80%, preferably at least 85%, 90% or even 95%, falling within 0.5 cm and 5.0 cm, or at least 85%, preferably at least 90%, 95% or more, falling within 0.5 and 6.0 cm.

In a further preferred embodiment, the percentage reference concerns a percentage by weight of hemp shives.

In an alternative preferred embodiment, the percentage reference refers to a percentage of the number of hemp shives processed in the said range relative to the total number of hemp shives processed. Number refers to the individual, loose particles of hemp shives after the reduction in length. This typically refers to individual shives (and possibly fibres), although a minority may still hang together.

In a preferred embodiment, the binder is a bio-based binder, preferably a bio-based resin binder, and further preferably comprising one or more of: soybean-based (resin) binder, castor oil-based (resin) binder, gelatine-based (resin) binder, linseed oil-based (resin) binder, lignin-based (resin) binder, palm oil-based (resin) binder, bioepoxy-based (resin) binder, tannin-based binder, bio-based polyester, furan humins, furan resin, bio-based polyethylene, potato starch binder, pMDI (polymeric MDI or polymeric diphenylmethane diisocyanate) binder, modified silane polymer binder, polyfurfuyl alcohol-based binder. By further preference, the binder is selected from a subset of pMDI, (bio-based) epoxy, polyester, furan humines, furan resin, soy-based binders, lignin-based binders, polyethylene or potato starch-based binders, by even further preference bio-based (if it was not already).

The binder can be provided in various ways for mixing with the hemp stalks, such as via spraying (spray), via roller, glue comb or glue knife, glue gun (pneumatic), and can be provided in full coverage over the surface, or in discrete sections, such as dots, lines, grid shape, etc.

The binder can be provided in various states for mixing with the hemp stalks, e.g. in liquid form, as a paste, hot-melt, powder, film and possible other forms.

In particular, pMDI, preferably where the binder is at least partially provided as bio-pMDI, offers excellent characteristics in terms of binding, while the weight percentage required can be kept low, as indicated earlier. The exact choice of this percentage depends on the strength requirements, and can be varied according to the application. However, the applicant noted that already at a maximum weight percentage of 7.5%, the panels are sufficiently strong for use in many applications, including as building materials, with a minimum internal bond (IB) between 0.40 MPa and 0.80 MPa. With an increase up to 20%, an IB value between 0.55 and 1.0 MPa can be obtained, or even higher.

Choosing bio-based binders offers the advantage of being easily recyclable, and more ecologically sound. By using a bio-based binder, a panel that is damaged, or would be taken out of use for some other reason, can be directly broken and shredded (or reduced via other breaking techniques) and recycled as processed hemp stalks, leading to a circular product.

In a preferred embodiment, the panel has a density between 500 and 750 kg/m³, preferably between 550 and 650 kg/m³, further preferably between 575 and 625 kg/m³ , such as, for example, between 580 and 620 kg/m³, or between 585 and 615 kg/m³, between 590 and 610 kg/m³, between 595 and 605 kg/m³, and most preferably about 600 kg/m³. Different values remain possible, depending on the desired applications for the panel. Thus, in some cases, less highly compressed panels can be used, which can achieve a better performance in terms of insulation value due to the presence of more air in the panel.

In a preferred embodiment, the panel undergoes at least one hot pressing step and at least one cold pressing step during production.

In a preferred embodiment, the panel further comprises a granular material with a maximum diameter of 2.5 mm, preferably of 1.0 mm, preferably of 500 µm, preferably of 250 µm, preferably of 100 µm.

In a preferred embodiment, the panel further comprises a granular material having a minimum diameter of 1 µm, preferably 10 µm, further preferably 25 µm, still further preferably 50 µm. In further preferred embodiments, the granular material has a maximum diameter according to the preceding paragraph.

The addition of granular material, such as coffee granules (whether used or not, preferably used), provides a smoother finish by filling in the grooves in the material on the surface, thus allowing the panel to also be used as a surface material. Moreover, by an appropriate choice of, or addition of colouring to, the granular material, the appearance of the panel can also be modified as desired. Preferably, the granular material concerns a biological material, such as coffee grounds as mentioned above, so that the panel is still easily recyclable ecologically. Other granular materials that could possibly be used are (possibly further processed into powder): cocoa powder, spices (cinnamon, paprika, cumin, etc. in powder form), starch (e.g. corn starch or other), talcum powder, powdered sodium dicarbonate, fine sand, clay, silica gel, sugar, (ink) pigments, alumina powder, basalt (as powder, flakes, flakes, fibres), etc.

In a preferred embodiment, the panel further comprises a plurality of glass fibres, preferably with a minimum length of 2.5 cm, preferably 5.0 cm, further preferably at least 10.0 cm, or even 15.0 cm, 20.0 cm, 25.0 cm or more, such as 30, 40 or 50 cm, to further reinforce the panel.

In a preferred embodiment, the processed hemp stalks comprise hemp fibres, wherein at least 50%, preferably at least 75%, of the hemp fibres have a length of at least 2.5 cm, preferably at least 4.0 cm. Further preferably at least 80%, 85% or even 90% have a length of at most 5.0 cm. As indicated earlier, working with fibres longer than the above dimensions is more efficient in terms of joint strength and also insulation.

In a further preferred embodiment, at least 50%, preferably at least 75%, of the hemp fibres have a maximum length of 50 cm, preferably of up to 40 cm and, in further preferred embodiments, of up to 25 cm or even lower, such as for example 20 cm or 15 cm. In further preferred embodiments, at least 80%, 85% or even 90% of the hemp fibres fall below these maximum length(s).

In a preferred embodiment, the processed hemp stalks comprise hemp shives, with at least 50%, preferably at least 75%, of the hemp shives having a length of no more than 5 cm, preferably no more than 4 cm. With further preference, at least 80%, 85% or even 90% have a length of no more than 5 cm, and with still further preference of no more than 4 cm. As indicated earlier, working with shives shorter than the above dimensions is more efficient in terms of joint strength and also insulation.

Most preferably, the requirements discussed above for hemp fibre and hemp shives are effectively combined.

The applicant notes that the reduction of the shives is more efficient than the fibres, given that the shives are stiffer and thus can be broken or cut better, while the fibres bend faster and thus do not tear, break or split. Given the greater suppleness of the fibres, it is also optimal that the shives have a greater reduction ratio (percentage of those below the predefined maximum length) than the fibres. Longer fibres still process well, also bind very well to other fibres and shives and offer good insulation characteristics. Moreover, to reduce the fibres to the same degree as the shives, a problem is that the shives themselves are reduced too far in length, which is also more energetically demanding.

In a preferred embodiment, the panel has a minimum internal bond (IB) of 0.4 MPa, preferably 0.5 MPa, even more preferably 0.6 MPa, even more preferably 0.7 MPa, and even more preferably 0.8 MPa or even 0.9 MPa. Obviously, higher values are even further preferred.

In a preferred embodiment, the panel has a minimum bending stiffness of 1000 MPa, preferably 1250 MPa, even further preferably 1500 MPa, even further preferably 1750 MPa, and even further preferably 2000 MPa. Obviously, higher values are even further preferred.

In a preferred embodiment, the panel has a minimum bending strength of 10MPa, preferably 12.5 MPa, further preferably 15 MPa, even further preferably 17.5 MPa, and even further preferably 20 MPa. Obviously, higher values are even further preferred.

In a preferred embodiment, the panel has a maximum swelling ratio of 10% after 24h immersion in water at room temperature, preferably 9.0%, even further preferably 8.5%, even further preferably 8.0%, and even further preferably 7.5% or even 7.0%, or lower. Obviously, lower values are even further preferred.

In a preferred embodiment, the thickness of the panel is at most 20 cm, preferably at most 15 cm or even at most 10 cm or less, such as 7.5 cm or 5 cm. The panel has at least a thickness of 0.5 cm, typically at least 1.0 cm, 2.0 cm or more such as 2.5 cm, 4.0 cm, and may even have a minimum thickness of 5.0 cm, 7.5 cm or more. The length and width dimensions can be chosen according to the requirements and application for the panel.

In a second aspect, the disclosure relates to a process for manufacturing a hemp-based wooden panel, comprising the following steps:
a. reducing hemp stalks in length to a substantially uniform length between 1.0 cm and 5.0 cm, preferably between 1.0 cm and 4.0 cm;
b. mixing the reduced hemp stalks with a binder into a homogeneous mixture in a mould, the binder being provided with a weight ratio to the reduced hemp stalks between 0.05 and 0.30, preferably between 0.1 and 0.25 in which the hemp stalks are isotropically distributed in terms of orientation;
c. compressing the homogeneous mixture in the mould under a pressure of preferably at least 10 bar, further preferably at least 20 bar;
d. heating the compressed mixture to a minimum core temperature in the mixture of at least 120°C, preferably at least 150°C, and maintaining the minimum core temperature for a predetermined time of at least 1 minute, preferably at least 5 minutes;
e. recompressing the heated mixture at a pressure, preferably of at least 10 bar, further preferably at least 20 bar;
f. cooling the recompressed mixture to a temperature below 50°C, preferably below 35°C.

Thereby, the hemp stalks in the cooled mixture extend isotropically oriented in the plane defined by the x-axis and y-axis, preferably where the processed hemp stalks extend anisotropically oriented in the plane defined by the x-axis and z-axis, and extend anisotropically oriented in the plane defined by the y-axis and z-axis.

The manufactured panel relates to one according to the first aspect of the invention. All characteristics thereof discussed above therefore apply to the method according to the second aspect, for example in terms of length distribution of the reduced hemp stalks, the proportions, the binder chosen, etc.

This assumes a panel with a (final) minimum thickness of at most 20 cm, preferably at most 15 cm or even at most 10 cm or less, such as 7.5 cm or 5 cm. The panel has at least a thickness of 0.5 cm, typically at least 1.0 cm, 2.0 cm or more such as 2.5 cm, 4.0 cm, and may even have a minimum thickness of 5.0 cm, 7.5 cm or more. Mixing the reduced hemp stalks with a binder is done in an isotropic manner, where the orientation of the hemp stalks is not affected, and leads to a substantially normally distributed distribution of the orientation of the hemp stalks. As discussed earlier, this orientation is affected during the pressing of the panel (compressing and recompressing), resulting in the hemp stalks in the final panel being isotropically distributed only in the xy plane, but not in the yz or xz plane, in which the hemp stalks will extend in terms of orientation more along the y and x axes than along the z axis. The ratio of the x or y component to the z component of the orientation may vary, but will preferably be at least 2:1, in further preference at least 3:1, 4:1 or even 5:1. In further preference, it will be at least 7.5:1 or even at least 10:1, 20:1, 40:1, 60:1, 100:1.

As discussed earlier, a panel made with reduced hemp stalks under the aforementioned characteristics in terms of length and orientation delivers a wide range of advantages over the state of the art, in terms of strength and insulating character.

Preferably, (re)compression is done at a minimum pressure of 10 bar, and preferably higher, such as at least 20 bar. However, in further preference, (re)compression is done at at least 30 bar, in a range up to a maximum of 100 bar. The applicant notes that higher pressures are, on the one hand, very difficult to achieve without compromising economic feasibility, and on the other hand that the marginal improvement in achieved density, and more importantly, ultimate strength and insulating character of the final product, are very limited. In practice, a maximum value of 80 bar is used for (re)compression, which is easily implementable on a large scale, and produces the desired results.

The choice of minimum temperature and minimum heating time is crucial to ensure that the core of the panel reaches the desired minimum temperature at which the binder is activated, and often curing already (partially) starts, possibly accelerated, and often with improved physical and mechanical properties due to increased crosslinking or polymerisation.

Making the heating time sufficiently long allows the binder to fully cure. Obviously, especially for thicker panels, the minimum heating time can be higher, such as at least 10 minutes, or even at least 15 minutes, 20 minutes or more, such as 30 minutes.

By performing the compression first at low (normal) temperature, the binder is not yet activated and the hemp stalks (fibres and/or shives) can be manipulated excellently through the pressing mold. This first compression step can be repeated several times. Once this first compression is done, the compressed material is heated and further compressed during and/or after heating, preferably again at the same pressure as in the first compression step(s).

In one possible embodiment, heated compression is done with heated press plates, where the press plates are heated to a temperature higher than the desired temperature for the material to be compressed. This may be at least 5°C warmer than the desired temperature, for example, 125°C, 130°C, 135°C, 140°C, 145°C, 155°C, 160°C, 165°C, 170°C or more. However, too high a temperature is detrimental, as it may adversely affect the binder, or damage the internal structures of the fibres and/or warps, which would reduce the strength of the panel. Thus, a maximum temperature of 175°C is preferred.

Once the temperature is reached in the core of the panel, the press plates can be brought to a lower temperature, approximately equal to the desired temperature for the core, so that this temperature is maintained.

Following hot compression, the compressed material is transferred to cold press plates, where it is further pressed, preferably at the same or similar pressure as in the previous steps. In this, the binder is (further) cured. The temperature at which this occurs is preferably further below 30°C.

In a preferred embodiment, the hemp stalks are unretted. As indicated earlier, this is a time-consuming, polluting (large CO₂ emissions) and demanding process, which also affects the structure of the fibres and shives. The applicant noticed that with unretted hemp stalks, a structurally firmer panel was obtained.

In a preferred embodiment, the method comprises a step of conditioning the reduced hemp stalks prior to mixing the reduced hemp stalks, wherein the conditioning takes at least 12 hours, preferably at least 24 hours, at a temperature between 16° and 30°C, preferably between 21°C and 25°C, and a relative humidity between 40% and 60%.

In a preferred embodiment, the heating of the compressed mixture is carried out with a pressing mold, under a minimum pressure of 10 bar, preferably 20 bar and further preferably 30 bar, and preferably with a maximum pressure of 100 bar. In this way, pressing can continue during the heating process, and expansion of the material during the temperature change is stopped.

In a preferred embodiment, cooling is performed with cold press plates. In this way, pressing can continue during the cooling process, and expansion of the material during the temperature change is avoided.

In a specifically preferred embodiment, heating is performed using electromagnetic radiation, preferably microwave radiation. The applicant noted that this form of heating is more energy-efficient towards heating the completeness of the material in the mould. When using heated press plates or press moulds, the heat has yet to penetrate to the core of the panel, which happens slowly. This creates a risk that the binder is not activated sufficiently in the core, and the panel has a weakened core due to incomplete curing of the binder there.

By working with microwave radiation, the entire thickness of the panel is heated to the desired temperature. This allows this process step to be performed faster, with greater reliability.

Additionally, it should be noted that heating via EM radiation, in particular microwave radiation, is energetically much more advantageous.

In what follows, the invention is described using non-limiting examples illustrating the invention, which are not intended or should not be interpreted to limit the scope of the invention which is defined solely by the appended claims.

### EXAMPLES

### EXAMPLE 1:

For a first panel, the hemp stalks processed to make the panel consisted of about 33.5% shives and about 66.5% fibres. Here, the shives had a length mostly (at least 75%) between 1 cm and 4 cm, while about 6.5% of the fibres consisted of fibres with a length less than 1 cm, about 13% of fibres with a length between 1 cm and 10 cm and about 80.5% of fibres with a length of at least 10 cm. From a sample on a total of 40 g of processed hemp stalks, the longest fibre was about 45 cm long.

The above hemp stalks were mixed with pMDI binder, in a ratio of 4:1 by weight (80 m% hemp stalks, 20 m% binder). This was used to make a panel with thickness of about 20 mm with following characteristics:
- density: 643 kg/m³ (range 630-650 kg/m³)
- IB (internal bond strength): 0.73 MPa (range 0.57-0.93 MPa)
- MOE (modulus of elasticity): 2078 MPa (range 1850-2350 MPa)
- MOR (flexural strength): 21 MPa (range 18.5-24.5 MPa)
- TS (thickness swelling or increase in thickness due to swelling after 24h immersion in water): 7% (range 6.2-7.4%)

Using the same batch of hemp stalks as for the first panel, a second panel was also made with a distribution of about 85 m% hemp stalks and about 15 m% pMDI binder; a third panel with a distribution of about 90 m% hemp stalks and about 10 m% pMDI binder; and a second panel made with a distribution of about 95 m% hemp stalks and about 5 m% binder.

This yielded the following values for the above parameters:

| | 2^{e} panel | 3^{e} panel | 4^{e} panel |
|---|---|---|---|
| Density (kg/m³) | 640 | 638 | 634 |
| IB (MPa) | 0.65 | 0.51 | 0.37 |
| MOE (MPa) | 2007 | 1912 | 1811 |
| MOR (MPa) | 19 | 17.2 | 15.1 |
| TS (%) | 9 | 11 | 13 |

It is assumed that the present invention is not limited to the embodiments described above and that some modifications or changes can be added provided that they do not fall outside of the scope of appended claims which define the invention.

## Claims

1. Hemp-based wood panel, wherein the panel extends along mutually orthogonal x and y axes, and has a thickness along a z-axis orthogonal to the x and y axes, including:
a. processed hemp stalks comprising hemp shives and hemp fibers;
b. a binder for joining the hemp stalks into a solid form;
wherein the processed hemp stalks are oriented along their length substantially at least quasi-isotropically, and optionally isotropically, wherein the processed hemp stalks extend isotropically oriented in the plane defined by the x-axis and y-axis, preferably wherein the processed hemp stalks extend anisotropically oriented in the plane defined by the x-axis and z-axis, and extend anisotropically oriented in the plane defined by the y-axis and z-axis;
wherein the processed hemp stalks constitute a weight percentage of at least 70% of the panel, and wherein the binder constitutes a weight percentage of at least 5% of the panel and at most 20% of the panel,
wherein the length of at least 75% of the hemp shives is between 1.0 and 5.0 cm, and
wherein the length of at least 50% of the hemp fibres is between 5.0 and 50.0 cm.

2. Hemp-based wood panel according to the preceding claim 1, wherein the processed hemp stems are a mixture of hemp shives and hemp fibers, in a weight ratio between 3:2 and 4:1, preferably between 2:1 and 3:1.

3. Hemp-based wood panel according to the preceding claim 1, wherein the processed hemp stalks are a mixture of hemp shives and hemp fibers in a weight ratio between 1:5 and 2:1, preferably between 1:4 and 1:1, further preferably between 1:3 and 9:11, and still further preferably between 3:7 and 2:3.

4. Hemp-based wood panel according to the preceding claim 1, wherein the processed hemp stalks are a mixture of hemp shives and hemp fibers in a weight ratio between 4:1 and 20:1, preferably between 6:1 and 15:1, further preferably between 7:1 and 12:1.

5. Hemp-based wood panel according to any of the preceding claims 1 to 4, wherein the processed hemp stalks are unretted.

6. Hemp-based wood panel according to any of the preceding claims 1 to 5, wherein the processed hemp shives have a length distribution with at least 40%, preferably 50%, below 1.0 cm, and at least 60% below 2.0 cm.

7. Hemp-based wood panel according to any of the preceding claims 1 to 6, wherein the binder is a bio-based binder, preferably a bio-based resin binder, and further preferably comprising one or more of: soy-based resin binder, castor oil-based resin binder, linseed oil-based resin binder, lignin-based resin binder, palm oil-based resin binder, bioepoxy-based resin binder, bio-based polyester, furan humines, furan resin, bio-based polyethylene, potato starch binder, pMDI, i.e. MDI or polymeric diphenylmethane diisocyanate binder.

8. Hemp-based wood panel according to any one of the preceding claims 1 to 7, wherein the panel further comprises a granular material having a maximum diameter of 2.5 mm, preferably of 1.0 mm, further preferably of 500 µm, even further preferably of 250 µm, and most preferably of 100 µm.

9. Hemp-based wood panel according to any of the preceding claims 1 to 8, wherein the panel further comprises a granular material having a minimum diameter of 1 µm, preferably of 10 µm, further preferred of 25 µm, and still further preferred of 50 µm.

10. Hemp-based wood panel according to any of the preceding claims 1 to 9, wherein the panel further comprises a plurality of glass fibers, having a minimum length of 2.5 cm, preferably 5.0 cm.

11. Hemp-based wood panel according to any one of the preceding claims 1 to 10, wherein at least 50%, preferably at least 75%, further preferably at least 85%, of the hemp fibers have a length of at most 20.0 cm, preferably at most 15.0 cm and further preferably at most 10.0 cm.

12. Hemp-based wood panel according to any of the preceding claims 1 to 11, wherein at least 60%, preferably at least 75%, of the hemp shives have a length of at most 5 cm, preferably at most 4 cm.

## Patentansprüche

1. Hanfbasierte Holzplatte, wobei sich die Platte entlang einer X- und einer Y-Achse erstreckt, die zueinander rechtwinklig liegen, und entlang einer Z-Achse, die rechtwinklig zur X- und zur Y-Achse liegt, eine Dicke aufweist, Folgendes beinhaltend:
a. verarbeitete Hanfstängel, Hanfschäben und Hanffasern umfassend,
b. ein Bindemittel, um die Hanfstängel zu einer festen Form zu verbinden,
wobei die verarbeiteten Hanfstängel entlang ihrer Länge im Wesentlichen mindestens quasi-isotrop und optional isotrop ausgerichtet sind, wobei sich die verarbeiteten Hanfstängel isotrop ausgerichtet in der Ebene erstrecken, die durch die X-Achse und die Y-Achse definiert ist, vorzugsweise wobei sich die verarbeiteten Hanfstängel anisotrop ausgerichtet in der Ebene erstrecken, die durch die X-Achse und die Z-Achse definiert ist, und sich anisotrop ausgerichtet in der Ebene erstrecken, die durch die Y-Achse und die Z-Achse definiert ist,
wobei die verarbeiteten Hanfstängel einen Gewichtsanteil von mindestens 70 % der Platte bilden und wobei das Bindemittel einen Gewichtsanteil von mindestens 5 % der Platte und höchstens 20 % der Platte bildet,
wobei die Länge von mindestens 75 % der Hanfschäben zwischen 1,0 und 5,0 cm beträgt,
wobei die Länge von mindestens 50 % der Hanffasern zwischen 5,0 und 50,0 cm beträgt.

2. Hanfbasierte Holzplatte nach dem vorhergehenden Anspruch 1, wobei die verarbeiteten Hanfstängel eine Mischung aus Hanfschäben und Hanffasern in einem Gewichtsverhältnis zwischen 3:2 und 4:1 sind, vorzugsweise zwischen 2:1 und 3:1.

3. Hanfbasierte Holzplatte nach dem vorhergehenden Anspruch 1, wobei die verarbeiteten Hanfstängel eine Mischung aus Hanfschäben und Hanffasern in einem Gewichtsverhältnis zwischen 1:5 und 2:1 sind, vorzugsweise zwischen 1:4 und 1:1, bevorzugter zwischen 1:3 und 9:11 und noch bevorzugter zwischen 3:7 und 2:3.

4. Hanfbasierte Holzplatte nach dem vorhergehenden Anspruch 1, wobei die verarbeiteten Hanfstängel eine Mischung aus Hanfschäben und Hanffasern in einem Gewichtsverhältnis zwischen 4:1 und 20:1 sind, vorzugsweise zwischen 6:1 und 15:1, bevorzugter zwischen 7:1 und 12:1.

5. Hanfbasierte Holzplatte nach einem der vorhergehenden Ansprüche 1 bis 4, wobei die verarbeiteten Hanfstängel ungeröstet sind.

6. Hanfbasierte Holzplatte nach einem der vorhergehenden Ansprüche 1 bis 5, wobei die verarbeiteten Hanfschäben eine Längenverteilung mit mindestens 40 %, vorzugsweise 50 %, unter 1,0 cm und mindestens 60 % unter 2,0 cm aufweisen.

7. Hanfbasierte Holzplatte nach einem der vorhergehenden Ansprüche 1 bis 6, wobei das Bindemittel ein bio-basiertes Bindemittel ist, vorzugsweise ein bio-basiertes Harzbindemittel, und ferner vorzugsweise eines oder mehrere des Folgenden umfasst: soja-basiertes Harzbindemittel, rizinusöl-basiertes Harzbindemittel, leinöl-basiertes Harzbindemittel, lignin-basiertes Harzbindemittel, palmöl-basiertes Harzbindemittel, bioepoxid-basiertes Harzbindemittel, biobasierter Polyester, Furanhuminstoffe, Furanharz, bio-basiertes Polyethylen, Kartoffelstärkebindemittel, pMDI, d. h. MDI- oder polymeres Diphenylmethandiisocyanat-Bindemittel.

8. Hanfbasierte Holzplatte nach einem der vorhergehenden Ansprüche 1 bis 7, wobei die Platte ferner ein Granulatmaterial mit einem maximalen Durchmesser von 2,5 mm, vorzugsweise 1,0 mm, bevorzugter 500 µm, noch bevorzugter 250 µm und am bevorzugtesten 100 µm, umfasst.

9. Hanfbasierte Holzplatte nach einem der vorhergehenden Ansprüche 1 bis 8, wobei die Platte ferner ein Granulatmaterial mit einem minimalen Durchmesser von 1 µm, vorzugsweise 10 µm, bevorzugter 25 µm und noch bevorzugter 50 µm, umfasst.

10. Hanfbasierte Holzplatte nach einem der vorhergehenden Ansprüche 1 bis 9, wobei die Platte ferner eine Vielzahl von Glasfasern mit einer minimalen Länge von 2,5 cm, vorzugsweise 5,0 cm, umfasst.

11. Hanfbasierte Holzplatte nach einem der vorhergehenden Ansprüche 1 bis 10, wobei mindestens 50 %, vorzugsweise mindestens 75 %, bevorzugter mindestens 85 % der Hanffasern eine Länge von höchstens 20,0 cm, vorzugsweise höchstens 15,0 cm und bevorzugter höchstens 10,0 cm aufweisen.

12. Hanfbasierte Holzplatte nach einem der vorhergehenden Ansprüche 1 bis 11, wobei mindestens 60 %, vorzugsweise mindestens 75 % der Hanfschäben eine Länge von höchstens 5 cm, vorzugsweise höchstens 4 cm aufweisen.

## Revendications

1. Panneau de bois à base de chanvre, dans lequel le panneau s'étend le long d'axes x et y mutuellement orthogonaux, et a une épaisseur le long d'un axe z orthogonal aux axes x et y, comportant :
a. des tiges de chanvre transformées comprenant des anas de chanvre et des fibres de chanvre ;
b. un liant pour assembler les tiges de chanvre sous une forme solide ;
dans lequel les tiges de chanvre transformées sont orientées le long de leur longueur sensiblement au moins de manière quasi-isotrope, et éventuellement isotrope, dans lequel les tiges de chanvre transformées s'étendent dans une orientation isotrope dans le plan défini par l'axe x et l'axe y, de préférence dans lequel les tiges de chanvre transformées s'étendent dans une orientation anisotrope dans le plan défini par l'axe x et l'axe z, et s'étendent dans une orientation anisotrope dans le plan défini par l'axe y et l'axe z ;
dans lequel les tiges de chanvre transformées représentent un pourcentage en poids d'au moins 70 % du panneau, et dans lequel le liant représente un pourcentage en poids d'au moins 5 % du panneau et d'au plus 20 % du panneau,
dans lequel la longueur d'au moins 75 % des anas de chanvre est comprise entre 1,0 et 5,0 cm, et
dans lequel la longueur d'au moins 50 % des fibres de chanvre est comprise entre 5,0 et 50,0 cm.

2. Panneau de bois à base de chanvre selon la revendication précédente 1, dans lequel les tiges de chanvre transformées sont un mélange d'anas de chanvre et de fibres de chanvre, dans un rapport de poids compris entre 3:2 et 4:1, de préférence entre 2:1 et 3:1.

3. Panneau de bois à base de chanvre selon la revendication précédente 1, dans lequel les tiges de chanvre transformées sont un mélange d'anas de chanvre et de fibres de chanvre dans un rapport de poids compris entre 1:5 et 2:1, de préférence entre 1:4 et 1:1, plus préférentiellement entre 1:3 et 9:11, et toujours plus préférentiellement entre 3:7 et 2:3.

4. Panneau de bois à base de chanvre selon la revendication précédente 1, dans lequel les tiges de chanvre transformées sont un mélange d'anas de chanvre et de fibres de chanvre dans un rapport de poids compris entre 4:1 et 20:1, de préférence entre 6:1 et 15:1, plus préférentiellement entre 7:1 et 12:1.

5. Panneau de bois à base de chanvre selon l'une quelconque des revendications précédentes 1 à 4, dans lequel les tiges de chanvre transformées sont non rouies.

6. Panneau de bois à base de chanvre selon l'une quelconque des revendications précédentes 1 à 5, dans lequel les anas de chanvre transformés ont une distribution de longueur d'au moins 40 %, de préférence 50 %, inférieure à 1,0 cm, et d'au moins 60 % inférieure à 2,0 cm.

7. Panneau de bois à base de chanvre selon l'une quelconque des revendications précédentes 1 à 6, dans lequel le liant est un liant biosourcé, de préférence un liant à base de résine biosourcée, et comprenant en outre de préférence l'un ou plusieurs parmi : liant de résine à base de soja, liant de résine à base d'huile de ricin, liant de résine à base d'huile de lin, liant de résine à base de lignine, liant de résine à base d'huile de palme, liant de résine à base de bioépoxy, polyester à base biologique, humines de furane, résine de furane, polyéthylène biosourcé, liant d'amidon de pomme de terre, pMDI, c.-à-d. liant MDI ou diisocyanate de diphénylméthane polymère.

8. Panneau de bois à base de chanvre selon l'une quelconque des revendications précédentes 1 à 7, dans lequel le panneau comprend en outre un matériau granulaire ayant un diamètre maximal de 2,5 mm, de préférence de 1,0 mm, plus préférentiellement de 500 µm, encore plus préférentiellement de 250 µm, et idéalement de 100 µm.

9. Panneau de bois à base de chanvre selon l'une quelconque des revendications précédentes 1 à 8, dans lequel le panneau comprend en outre un matériau granulaire ayant un diamètre minimal de 1 µm, de préférence de 10 µm, plus préférentiellement de 25 µm, et toujours plus préférentiellement de 50 µm.

10. Panneau de bois à base de chanvre selon l'une quelconque des revendications précédentes 1 à 9, dans lequel le panneau comprend en outre une pluralité de fibres de verre d'une longueur minimale de 2,5 cm, de préférence de 5,0 cm.

11. Panneau de bois à base de chanvre selon l'une quelconque des revendications précédentes 1 à 10, dans lequel au moins 50 %, de préférence au moins 75 %, plus préférentiellement au moins 85 %, des fibres de chanvre ont une longueur d'au plus 20,0 cm, de préférence d'au plus 15,0 cm et plus préférentiellement d'au plus 10,0 cm.

12. Panneau de bois à base de chanvre selon l'une quelconque des revendications précédentes 1 à 11, dans lequel au moins 60 %, de préférence au moins 75 %, des anas de chanvre ont une longueur d'au plus 5 cm, de préférence d'au plus 4 cm.
